# EUROPEAN PATENT APPLICATION

(11) **EP 4 485 668 A1**
(43) Date of publication of application: **01.01.2025**
(21) Application number: 22962480.4
(22) Date of filing: 21.10.2022
(51) Int. Cl.: H01M 50/502, H01M 50/503

(54) **BATTERY MODULE, BATTERY, AND ELECTRICAL DEVICE**

(71) Applicant: Contemporary Amperex Technology Co., Limited, Ningde, Fujian 352100 (CN)
(72) Inventor: LIN, Xinwei, Ningde, Fujian 352100 (CN); LI, Lingyu, Ningde, Fujian 352100 (CN)
(74) Representative: Kraus & Lederer PartGmbB
(86) International application number: PCT/CN2022/126811
(87) International publication number: WO 2024/082298

(57) **Abstract**

The embodiments of the present disclosure provide a battery module, battery, and electrical device, relating to the field of battery technology. The battery module comprises a battery cell group, an end plate, a fixing base, and an output pole. The battery cell group comprises multiple battery cells arranged in a stack along a first direction. The end plate is arranged on one side of the battery cell group along the first direction, and the end plate comprises a first surface away from the battery cell group. The fixing base is connected to the end plate and protrudes from the first surface. One end of the output pole is electrically connected to the battery cell group, and the other end of the output pole is fixed to the fixing base. The battery formed by the battery module has a higher energy density.

## Description

### Technical Field

The present disclosure relates to the technical field of battery, in particular to a battery module, battery, and electrical device.

### Background Art

Energy conservation and emission reduction are the keys to the sustainable development of the automotive industry, and electric vehicles, due to their energy-saving and environmentally friendly advantages, have become an important component of sustainable development in the automotive industry. For electric vehicles, battery technology is another crucial factor that affects their development.

In the development of battery technology, in addition to increasing the safety of batteries, energy density is also an issue that cannot be ignored. Hence, how to improve the energy density of batteries is a pressing technical issue in battery technology.

### Summary

The objective of the present disclosure is to provide a battery module, battery, and electrical device, wherein the battery formed by the battery module has a higher energy density.

The present disclosure is realized by the following technical solutions.

In the first aspect, the present disclosure provides a battery module. The battery module comprises a battery cell group, an end plate, a fixing base, and an output pole. The battery cell group comprises multiple battery cells arranged in a stack along a first direction. The end plate is arranged on one side of the battery cell group along the first direction, and the end plate comprises a first surface away from the battery cell group. The fixing base is connected to the end plate and protrudes from the first surface. One end of the output pole is electrically connected to the battery cell group, and the other end of the output pole is fixed to the fixing base.

According to the battery module in the embodiments of the present disclosure, the fixing base is connected to the end plate and protrudes from the first surface of the end plate away from the battery cell group. This allows for a thinner thickness of the end plate, thus reducing the assembly space occupied by the battery module. Consequently, the battery formed by the battery module has a higher energy density.

According to some embodiments of the present disclosure, the fixing base and the end plate are integrally molded.

In the above embodiment, the fixing base and the end plate can be manufactured synchronously, which facilitates processing and reduces manufacturing difficulty.

According to some embodiments of the present disclosure, the battery cell comprises a casing and an electrode terminal. The casing is provided with a first wall facing the end plate, and the electrode terminal is arranged on the first wall. The electrode terminal is provided with a first side surface, and a plane in which the first side surface is located intersects the first wall. The output pole is connected to the first side surface of the electrode terminal of the battery cell closest to the end plate in the battery cell group.

In the above embodiment, the electrode terminal is provided in the first wall of the casing facing the end plate so as to facilitate the realization of the electrical connection between the output pole and the battery cell group.

According to some embodiments of the present disclosure, the output pole comprises a first segment, a second segment, and a third segment. The first segment is connected to the first side surface of the electrode terminal of the battery cell closest to the end plate in the battery cell group. The third segment is fixed to the fixing base, and the second segment connects the first segment and the third segment.

In the above solution, the first segment is connected to the first side surface of the electrode terminal of the battery cell closest to the end plate in the battery cell group so as to allow the first segment to have a smaller dimension in the first direction and to facilitate the electrical connection between the output pole and the battery cell group. The third segment is fixed to the fixing base so as to facilitate the assembly of the output pole with the fixing base.

According to some embodiments of the present disclosure, the first segment extends from one end of the second segment in a width direction, and the third segment extends from one end of the second segment in a length direction. The width direction of the second segment and the length direction of the second segment intersect the first direction two by two.

In the above solution, the first segment extends from one end of the second segment in the width direction so as to facilitate the connection of the first segment to the battery cell group. The third segment extends from one end of the second segment in the length direction, making efficient use of assembly space and facilitating the assembly process.

According to some embodiments of the present disclosure, the first segment is perpendicular to the second segment, and/or the third segment is perpendicular to the second segment.

In the above solution, the first segment is perpendicular to the second segment, and/or the third segment is perpendicular to the second segment, which is simple in structure and easy to process and manufacture.

According to some embodiments of the present disclosure, a first groove is provided on a side of the end plate facing the battery cell group, and at least a portion of the second segment is arranged within the first groove.

In the above embodiment, at least a portion of the second segment is provided in the first groove, which rationally utilizes the assembly space and reduces the space occupation so as to make the battery module compact.

According to some embodiments of the present disclosure, the second segment is parallel to a groove bottom surface of the first groove.

In the above embodiment, the second segment is parallel to a groove bottom surface of the first groove so as to facilitate the assembly of the second segment and the end plate, and thus the assembly of the second segment and the end plate is more efficient.

According to some embodiments of the present disclosure, along the first direction, a first gap is arranged between the second segment and the groove bottom surface of the first groove.

In the above solution, a first gap provided between the second segment and the bottom surface of the first groove facilitates the assembly of the second segment with the end plate, reducing the risk of interference between the second segment and the groove bottom surface of the first groove.

According to some embodiments of the present disclosure, the size of the first gap is C, satisfying: 1 mm ≤ C ≤ 5mm.

In the above solution, the size of the first gap satisfies the above range, which is able to reduce the risk of interference between the second segment and the groove bottom surface of the first groove and to occupy a relatively small assembly space. If the first gap is too small, it can easily lead to interference between the second segment and the groove bottom surface of the first groove. If the first gap is too large, it makes the output pole occupy a larger assembly space after assembly with the end plate, causing space wastage.

According to some embodiments of the present disclosure, 2.5mm≤C≤3.5mm.

In the above solution, compared to 1 mm ≤ C ≤ 5mm, when 2.5mm ≤ C ≤ 3.5mm, the risk of interference between the second segment and the groove bottom surface of the first groove is further reduced, and it occupies a smaller assembly space.

According to some embodiments of the present disclosure, the first groove extends along the second direction, and the fixing base is provided at one end of the first groove along the second direction. The second direction intersects the first direction.

In the above solution, the fixing base is provided at one end of the first groove along the second direction, which facilitates processing and manufacturing.

According to some embodiments of the present disclosure, the end plate comprises an end plate body and an extending portion. The extending portion extends from one end of the end plate body along a third direction, and the thickness of the extending portion is less than the thickness of the end plate body so that a first groove is formed on one side of the end plate, away from the first surface. The fixing base is arranged at one end of the extending portion along the second direction. The third direction, the second direction, and the first direction intersect with each other two by two.

In the above solution, the connection between the extending portion and the end plate body forms the first groove, which is a simple structure that is easy to manufacture. Due to the smaller thickness of the extending portion compared to the thickness of the end plate body, arranging the fixing base at one end of the extending portion along the second direction allows for a reduced thickness of the end plate body. This decreases the space occupied by the end plate in the first direction.

According to some embodiments of the present disclosure, along the second direction, one end of the fixing base is arranged on a portion of the end plate body that extends beyond the extending portion.

In the above solution, along the second direction, the portion of the end plate body that extends beyond the extending portion is provided with one end of the fixing base, which ensures that the structure, after the cooperation of the fixing base with the extending portion, occupies a smaller space in the second direction, thus reducing the space occupied by the battery module in the second direction.

According to some embodiments of the present disclosure, a side of the extending portion away from the battery cell group is coplanar with a side of the end plate body away from the battery cell group.

In the above solution, a side of the extending portion away from the battery cell group is coplanar with a side of the end plate body away from the battery cell group. In other words, the surface of the end plate on the side away from the battery cell group is a flat surface, facilitating the coordination of the battery module with other components.

According to some embodiments of the present disclosure, the casing is also provided with a second wall arranged opposite to the first wall. The first region at an edge of the second wall is recessed to form a second groove, wherein the second groove is configured to accommodate the electrode terminal of the battery cell adjacent to the second wall.

In the above solution, the providing of the second groove allows for the accommodation of the electrode terminal of the battery cell adjacent to the second wall so that the battery module is compact and the battery module has a higher energy density.

According to some embodiments of the present disclosure, the casing is provided with a first wall and a second wall arranged opposite to each other along the first direction, a third wall and a fourth wall arranged opposite to each other along the second direction, and a fifth wall and a sixth wall arranged opposite to each other along the third direction. The area of the third wall and the area of the fourth wall are both smaller than the area of the first wall; the area of the third wall and the area of the fourth wall are both smaller than the area of the second wall; the area of the fifth wall and the area of the sixth wall are both smaller than the area of the first wall; and the area of the fifth wall and the area of the sixth wall are both smaller than the area of the second wall. The first direction, the second direction, and the third direction intersect with each other two by two.

In the above solution, the first wall and the second wall are the walls with a larger area of the casing. The first wall is perpendicular to the first direction so as to facilitate a compact structure of the battery cell group, thus enabling a higher energy density in the battery module.

In the second aspect, the present disclosure provides a battery, wherein the battery comprises a box and a battery module provided in any one of the embodiments. The battery module is provided in the box.

The battery according to the embodiments of the present disclosure, using the above-described battery module, achieves a high space utilization rate within the box, enabling a battery with a higher energy density.

According to some embodiments of the present disclosure, the battery also comprises a partition beam. The partition beam is arranged inside the box. Along the first direction, the end plate is located between the battery cell group and the partition beam, and the fixing base is arranged on the partition beam.

In the above solution, the end plate is arranged between the battery cell group and the partition beam so as to facilitate the isolation of the battery cell group from the partition beam and to reduce the risk of short-circuiting of the battery cell group in contact with the partition beam. The fixing base is arranged on the partition beam, which, on one hand, allows the end plate to have a thinner thickness, reducing the space occupancy of the end plate in the first direction. On the other hand, it facilitates the positioning and the support for the fixing base.

According to some embodiments of the present disclosure, the box comprises a bottom wall and side walls. The side walls surround the bottom wall, and the partition beam is arranged on the bottom wall. The partition beam extends along the third direction. The third direction, the thickness direction of the bottom wall, and the first direction intersect with each other two by two.

In the above solution, the side walls and bottom wall define a space for accommodating the battery cell group. The partition beam is arranged on the bottom wall so as to ensure a stable connection between the partition beam and the box, thus facilitating the fixation of the fixing base on the partition beam. The partition beam extends along the third direction so as to allow for a smaller dimension of the partition beam in the first direction, thus reducing the space occupied by the partition beam in the first direction and enabling a higher space utilization rate within the box.

According to some embodiments of the present disclosure, the partition beam comprises a top surface away from the bottom wall. The partition beam is provided with a third groove that is recessed from the top surface towards the bottom wall. At least a portion of the fixing base is provided in the third groove.

In the above solution, the third groove provides a space for accommodating the fixing base. At least a portion of the fixing base is provided in the third groove, which is able to reduce the space occupied by the fixing base in the thickness direction of the bottom wall after assembly with the partition beam. This decreases the impact of the fixing based on the space utilization rate within the box.

According to some embodiments of the present disclosure, the fixing base does not protrude from the top surface.

In the above solution, the fixing base does not protrude from the top surface. After the fixing base is mounted on the partition beam, it does not occupy additional space in the thickness direction of the bottom wall, and thus the impact on the energy density of the battery is reduced.

According to some embodiments of the present disclosure, the fixing base is in contact with the groove bottom surface of the third groove.

In the above solution, the contact between the fixing base and the groove bottom surface of the third groove facilitates the support of the fixing base by the groove bottom surface of the third groove so as to achieve the positioning assembly of the fixing base with the partition beam.

According to some embodiments of the present disclosure, the partition beam is provided with the battery modules on both sides along the first direction. The battery also comprises a busbar component, wherein the busbar component is connected to the output poles of the two battery modules located on both sides of the partition beam.

In the above solution, the electrical connection of the output poles of the two battery modules located on both sides of the partition beam is enabled by the busbar component, which is easy to assemble.

According to some embodiments of the present disclosure, the fixing bases of the two battery modules are arranged along the first direction.

In the above solution, the fixing bases of the two battery modules are arranged along the first direction so as to facilitate the connection of the busbar component to the output poles of the two battery modules and make assembly more convenient.

According to some embodiments of the present disclosure, an avoidance portion is provided on the side where the fixing bases of the two battery modules are close to each other, and the avoidance portion is configured to avoid the busbar component.

In the above solution, the avoidance of the busbar component by the avoidance portion makes the busbar component and the fixing base compact and reduces space occupation.

According to some embodiments of the present disclosure, along the first direction, a second gap is provided between the fixing bases of the two battery modules.

In the above solution, the second gap is provided to reduce the risk of interference between the fixing bases of the two battery modules.

According to some embodiments of the present disclosure, the busbar component comprises a bent portion and two connecting portions. The two connecting portions are respectively connected to the output poles of the two battery modules, and the bent portion is connected to the two connecting portions.

In the above solution, when the battery experiences vibration, the bent portion can absorb the stress applied to the busbar component, reducing the probability of movement of the connecting portions relative to the output poles. This ensures a reliable connection between the connecting portions and the corresponding output poles of the battery modules.

According to some embodiments of the present disclosure, the output pole includes a first connecting hole, and the busbar component includes two through-holes. The two through-holes are respectively arranged to correspond to the first connecting holes of the two output poles of the two battery modules on both sides of the partition beam. The battery also includes a fastener, and the busbar component and the output pole of the corresponding battery module are connected by the fastener inserted into the through-holes and the first connecting hole.

In the above embodiment, the busbar component is connected to the output pole of the corresponding battery module by the fastener, which is simple to operate and easy to assemble.

According to some embodiments of the present disclosure, the battery also includes a nut. The nut is fixed on a side of the output pole facing the fixing base. The threaded hole of the nut is provided in correspondence with the first connecting hole. The fixing base is provided with a second connecting hole, and at least a portion of the nut is positioned within the second connecting hole, and in a clearance fit with the second connecting hole. The fastener is inserted into the through-holes and the first connecting hole and is threadedly connected with the nut.

In the above solution, the convenient assembly is achieved by threadedly connecting the fastener to the nut. Due to the cooperation of the nut and the gap in the second connecting hole, during assembly, the position of the nut within the second connecting hole can be adjusted according to the actual situation to absorb machining errors. This facilitates the assembly of the busbar component, output pole, and fixing base.

According to some embodiments of the present disclosure, a diameter of the second connecting hole is D1, and an outer diameter of the nut is D2, satisfying 2mm ≤ D1-D2 ≤ 8mm.

In the above solution, the diameter D1 of the second connecting hole is greater than the outer diameter D2 of the nut. The difference between the diameter D1 of the second connecting hole and the outer diameter D2 of the nut satisfies 2mm ≤ D1-D2 ≤ 8mm, thus facilitating the absorption of machining errors and ensuring precise assembly of the busbar component with the output pole. If D1-D2 is too small (e.g., less than 2mm), it is prone to lead to interference during the assembly of the nut with the fixing base. If D1-D2 is too large (e.g., greater than 8mm), it is prone to a loose assembly of the nut with the fixing base.

According to some embodiments of the present disclosure, 4mm≤D1-D2≤6mm.

Compared to 2mm ≤ D1-D2 ≤ 8mm, when 4mm ≤ D1-D2 ≤ 6mm, it is not only convenient for the assembly of the nut with the fixing base but also reduces the probability of the nut loosening after assembly with the fixing base.

According to some embodiments of the present disclosure, one of the two through-holes is an elongate hole extending along the first direction.

In the above solution, the providing of the elongate hole facilitates eliminating machining errors so as to ensure a precise assembly of the busbar component with the output poles of the two battery modules.

In the third aspect, the present disclosure further provides an electrical device comprising a battery provided in any of the above embodiments.

The above description is only an overview of the technical solution of the present disclosure. To provide a clearer understanding of the technical solutions of the present disclosure, it can be implemented according to the content of the summary. In order to make the above and other objectives, features, and advantages of the present disclosure more apparent and understandable, specific embodiments of the present disclosure are provided below.

### Brief Description of Drawings

To provide a clearer understanding of the technical solution of the embodiments of the present disclosure, the following brief introduction of the drawings in the embodiments of the present disclosure will be presented. It is evident that the described drawings below are merely some embodiments of the present disclosure. Those skilled in the art can obtain additional drawings based on the described drawings without the need for inventive effort.
FIG. 1 is a schematic diagram of a structure of a vehicle provided in some embodiments of the present disclosure;
FIG. 2 is an exploded view of a battery provided in some embodiments of the present disclosure;
FIG. 3 is a schematic diagram of a battery module provided in some embodiments of the present disclosure;
FIG. 4 is a schematic diagram of the cooperative state of an end plate and a fixing base provided in some embodiments of the present disclosure;
FIG. 5 is a structural schematic diagram of a battery cell and an output pole provided in some embodiments of the present disclosure;
FIG. 6 is an assembly schematic diagram of an electrode terminal and a first wall provided in some embodiments of the present disclosure;
FIG. 7 is a partially enlarged view at position A of FIG. 3;
FIG. 8 is a structural schematic diagram of the output pole and the end plate provided in some embodiments of the present disclosure;
FIG. 9 is a partially enlarged view at position B of FIG. 8;
FIG. 10 is a partial schematic diagram of the cooperative state of the output pole and the end plate provided in some embodiments of the present disclosure;
FIG. 11 is a structural schematic diagram of a battery provided in some embodiments of the present disclosure;
FIG. 12 is an assembly schematic diagram of the fixing base and the partition beam provided in some embodiments of the present disclosure;
FIG. 13 is a partially enlarged view at position E of FIG. 11;
FIG. 14 is a structural schematic diagram of a busbar component and a fixing base provided in some embodiments of the present disclosure;
FIG. 15 is a cross-sectional view of the battery provided in some embodiments of the present disclosure;
FIG. 16 is a partially enlarged view at position F of FIG. 15;
FIG. 17 is a partially enlarged view at position G of FIG. 16;

In the drawings, the drawings are not drawn to actual scale.

Reference numerals 100- battery; 10- box; 11- first sub-box; 111-bottom wall; 112- side wall; 12- second sub-box; 20- battery module; 21-battery cell; 211- casing; 2111- first wall; 2112- second wall; 2113- second groove; 212- electrode terminal; 2121- first side surface; 22- end plate; 221-end plate body; 222- extending portion; 223- first groove; 224- first surface; 23- fixing base; 231- avoidance portion; 232- second connecting hole; 24-output pole; 241- first segment; 242- second segment; 243- third segment; 2431- first connecting hole; 30- partition beam; 31- top surface; 32- third groove; 40- busbar component; 41- bent portion; 42 - connecting portion; 421-through-hole; 50 - fastener; 60- nut; 200- controller; 300- motor; 1000- vehicle; Q1 - first gap; Q2- second gap.

### Detailed Description of Embodiments

Implementations of the present disclosure are described in further detail below in connection with the drawings and embodiments. The detailed description and drawings of the following embodiments are provided for illustrative purposes to explain the principles of the present disclosure. However, they should not be construed to limit the scope of the present disclosure. The present disclosure is not restricted to the described embodiments.

Unless otherwise defined, all technical and scientific terms used herein have the same meaning as understood by those skilled in the art of the relevant technical field. The terms used herein are used for the purpose of describing specific embodiments and are not intended to limit the present disclosure. The terms "comprising" and "providing" and their variations, as well as any other variations, are intended to cover non-exclusive inclusion in the summary and the claims of the present disclosure, as well as in the drawings.

The terms "first", "second", etc., used in the summary and claims of the present disclosure, or in the above drawings, are used to distinguish between different objects and are not intended to describe a specific sequence or hierarchy.

The term "embodiment" used in the present disclosure means that specific features, structures, or characteristics described in conjunction with the embodiment can be included in at least one embodiment of the present disclosure. The use of this phrase in various parts of the summary does not necessarily refer to the same embodiment, nor does it imply that these embodiments are mutually exclusive or independent of each other. Those skilled in the art understand explicitly and implicitly that the embodiments described in the present disclosure can be combined with other embodiments.

In the description of the present disclosure, it should be noted that, unless otherwise clearly stipulated and limited, the terms "provide", "connect", "connection" and "attach" should be understood in a broad sense, for example, it can be a fixed connection, a detachable connection, or an integral connection, and it can be a direct connection, an indirect connection through an intermediary, or an internal communication between two components. Those of ordinary skill in the art can understand the meanings of the above terms in the present disclosure according to specific situations.

In the present disclosure, the term "and/or" is used as a way to describe the relationship between associated objects, indicating that there can be three possible relationships. For example, "A and/or B" can represent: the presence of A, the presence of both A and B, or the presence of B. Additionally, the character "/" in the present disclosure generally represents an "or" relationship between the preceding and following associated objects.

In the present disclosure, the term "multiple" refers to two or more (including two). Similarly, "multiple groups" refers to two or more groups (including two groups), and "multiple pieces" refers to two or more pieces (including two pieces).

The development of battery technology needs to consider multiple design factors simultaneously, such as safety, discharge capacity, charge-discharge rates, and other performance parameters. Additionally, the energy density of the battery also needs to be taken into consideration.

The battery includes a box and a battery module provided in the box. The battery module includes a battery cell group, two end plates, a fixing base, and an output pole. The two end plates are respectively arranged on both sides of the battery cell group. The output pole is configured to output the electrical energy of the battery cell group, and the output pole is fixed to the end plate through the fixing base.

In the related technology, to arrange the fixing base, the thickness of the end plate is usually relatively large. As a result, the battery module occupies a relatively large assembly space. When the battery module is assembled inside a box, due to the thicker thickness of the end plate, more internal space in the box is occupied, which in turn leads to a lower energy density of the battery.

In light of this, to address the technical problem of low energy density in the battery due to a thicker thickness of the end plate, the inventors conducted in-depth research and devised a technical solution, in which the fixing base is connected to the end plate and protrudes from the surface of the end plate away from the battery cell group. This design allows for a thinner end plate so as to reduce the assembly space of the battery module. When the battery module is coordinated with the box, more battery cells can be arranged in the interior of the box, resulting in a higher energy density for the battery.

The battery disclosed in the embodiments of the present disclosure can be used in various electrical devices, comprising but not limited to vehicles, ships, or aircraft. The power system of the electrical device can be formed using the battery disclosed in the present disclosure.

The embodiments of the present disclosure provide an electrical device that uses batteries as a power source. The electrical devices can include but are not limited to mobile phones, tablets, laptops, electric toys, power tools, electric bicycles, electric motorcycles, electric cars, ships, spacecraft, and so on. The electric toys can include stationary or mobile electric toys, for example, video game consoles, electric car toys, electric boat toys, and electric airplane toys. The spacecraft can include aircraft, rockets, space shuttles, and spacecraft, among others.

For ease of explanation, the following embodiment will be described using one embodiment of the present disclosure where the electrical device is a vehicle 1000 as an example.

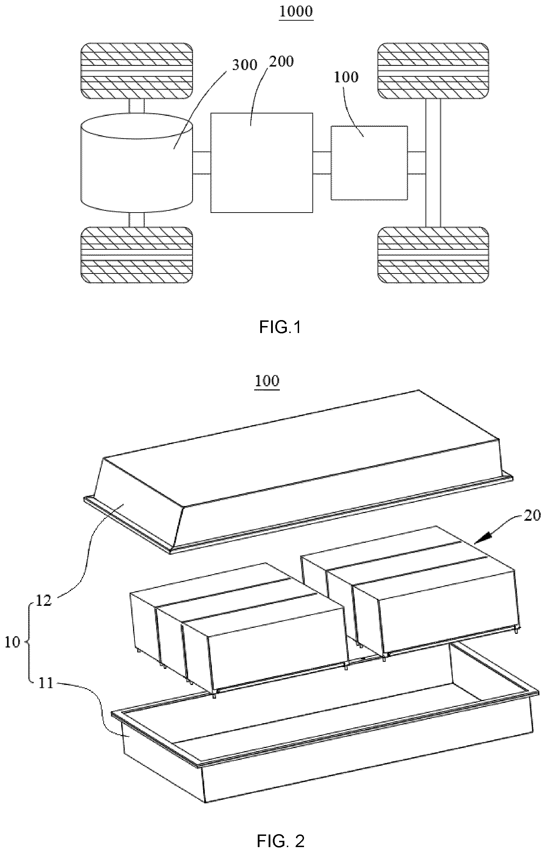

Referring to FIG. 1, FIG. 1 is a schematic diagram of a structure of a vehicle provided in some embodiments of the present disclosure. The vehicle 1000 can be a gasoline-powered car, a natural gas car, or a new energy vehicle. The new energy vehicles can be pure electric cars, hybrid cars, extended-range cars, etc. A battery 100 is provided inside the vehicle 1000, wherein the battery 100 can be arranged at the bottom, front, or rear of the vehicle 1000. The battery 100 is configured to provide power for the vehicle 1000. For instance, the battery 100 can serve as the operational power source for the vehicle 1000, providing power to the electrical systems of the vehicle 1000 for tasks such as starting, navigation, and operational power requirements of the vehicle 1000 during its operation.

Additionally, the vehicle 1000 also comprises a controller 200 and a motor 300. The controller 200 is configured to manage the supply of power from the battery 100 to the motor 300, e.g., for working power requirements for starting, navigating, and driving the vehicle 1000.

In some embodiments of the present disclosure, the battery 100 serves not only as the operational power source for the vehicle 1000 but also as the driving power source for the vehicle 1000. It can replace or partially substitute for conventional fuels like gasoline or natural gas to provide driving propulsion for the vehicle 1000.

Referring to FIG. 2, FIG. 2 is an exploded view of a battery provided in some embodiments of the present disclosure. The battery 100 comprises a box 10 and a battery module 20, wherein the box 20 is arranged in the battery module 10.

The box 10 is configured to provide a containment space for the battery module 20, and the box 10 can be of various structures. In some embodiments, the box 10 can comprise a first sub-box 11 and a second sub-box 12, wherein the first box bod 11 and the second sub-box 12 are capped with each other. The first sub-box 11 and the second sub-box 12 collectively define a containment space for accommodating the battery module 20. The first sub-box 11 can be a hollow structure open at one end, and the second sub-box 12 can be a plate-like structure. The second sub-box 12 is capped over an opening side of the first sub-box 11 so that the first sub-box 11 and the second sub-box 12 together define a containment space. Alternatively, both the first sub-box 11 and the second sub-box 12 can be hollow structures open at one end, and an open side of the first sub-box 11 is capped over an opening side of the second sub-box 12.

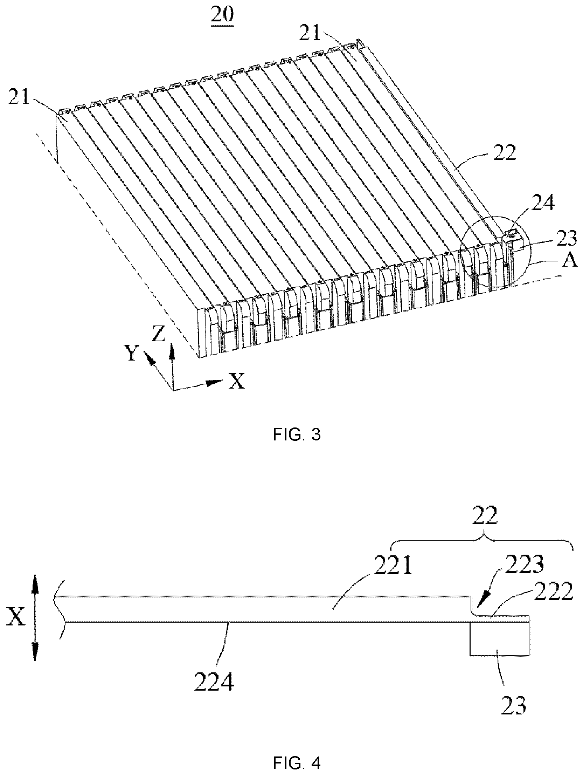

Referring to FIG. 3 and FIG. 4, FIG. 3 is a schematic diagram of a battery module provided in some embodiments of the present disclosure; for ease of description, in FIG. 3, the battery module is a schematic representation of a partial structure, and FIG. 4 is a schematic diagram of the cooperative state of an end plate and a fixing base provided in some embodiments of the present disclosure. According to some embodiments of the present disclosure, the present disclosure provides a battery module 20. The battery module 20 comprises a battery cell group, an end plate 22, a fixing base 23, and an output pole 24. The battery cell group comprises multiple battery cells 21 arranged in a stack along a first direction X. The end plate 22 is arranged on one side of the battery cell group along the first direction X, and the end plate 22 comprises a first surface 224 away from the battery cell group. The fixing base 23 is connected to the end plate 22 and protrudes from the first surface 224. One end of the output pole 24 is electrically connected to the battery cell group, and the other end of the output pole 24 is fixed to the fixing base 23.

In the battery module 20, the multiple battery cells 21 can be connected in series, parallel, or hybrid. A hybrid connection refers to having both series and parallel connections among multiple battery cells 21.

Each battery cell 21 can be a secondary battery or a primary battery. The battery cell 21 can also be a lithium-sulfur battery, sodium-ion battery, magnesium-ion battery, or other types, but is not limited to these.

The end plate 22 is arranged on one side of the battery cell group along the first direction X. The end plate 22 is provided adjacent to the battery cell group. The end plate 22 can serve to protect the battery cell group. The end plate 22 can be an insulating component to isolate the battery cell group from other components, such as partition beams, thereby reducing the risk of short-circuiting of the battery cell group in contact with other components.

The material of the end plate 22 can be a mixture of polycarbonate (PC) and acrylonitrile-butadiene-styrene copolymer (ABS), polyhexamethylene adipamide, fiberglass, etc. The present disclosure does not impose restrictions on the material of end plate 22.

In some embodiments, the number of the end plates 22 can be two. The two end plates 22 are provided on opposite two sides of the battery cell group along the first direction X so as to clamp the battery cell group.

The first surface 224 is the surface of the end plate 22 away from the battery cell group. The first surface 224 is farther away from the battery cell group along the first direction X compared to the other surfaces of the end plate 22.

The fixing base 23 is a component configured to secure the output pole 24. The fixing base 23 is connected to the end plate 22 to secure the output pole 24 to the end plate 22. The material of the fixing base 23 can be the same as that of the end plate 22, and the material of the fixing base 23 can be such as polyhexamethylene adipamide, fiberglass, etc. The present disclosure does not impose restrictions on the material of the fixing base 23.

The protrusion of the fixing base 23 from the first surface 224 means that the fixing base 23 is protruded by the first surface 224 along the first direction X in a direction away from the battery cell group.

The electrode terminal 24 is a component configured to output the electrical energy of the battery cell group. The output pole 24 can be a metal component, and the material of the output pole 24 can be copper, aluminum, and the like.

According to the battery module 20 in the embodiments of the present disclosure, the fixing base 23 is connected to the end plate 22 and protrudes from the first surface 224 of the end plate 22 away from the battery cell group. In the first direction X, the fixing base 23 has less overlap region with the end plate 22, which allows for a thinner thickness of the end plate 22 so as to reduce the assembly space occupied by the battery module 20. Consequently, the battery 100 formed by the battery module 20 has a higher energy density.

According to some embodiments of the present disclosure, the fixing base 23 and the end plate 22 are integrally molded.

The fixing base 23 and the end plate 22 can be integrally molded through injection molding.

In the above embodiment, the fixing base 23 and the end plate 22 can be manufactured synchronously, which facilitates processing and reduces manufacturing difficulty.

According to some embodiments of the present disclosure, the fixing base 23 and the end plate 22 can also be separately arranged, and both can be fixed in one. For example, the fixing base 23 and the end plate 22 can be snapped, riveted, bonded, etc.

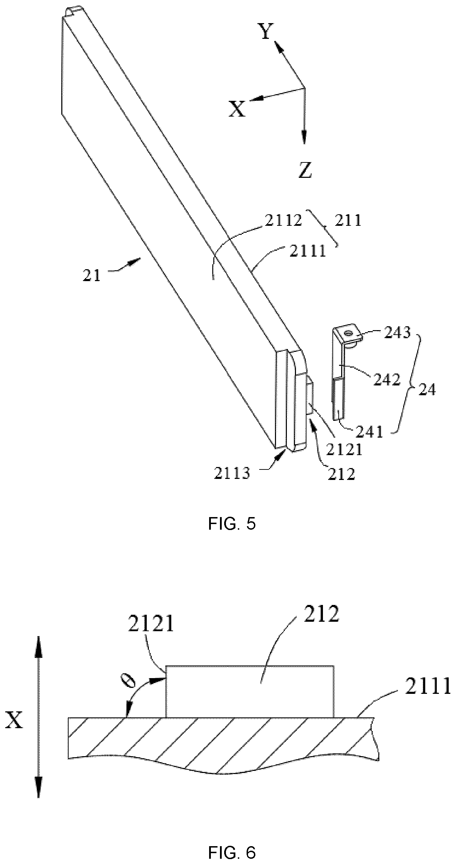

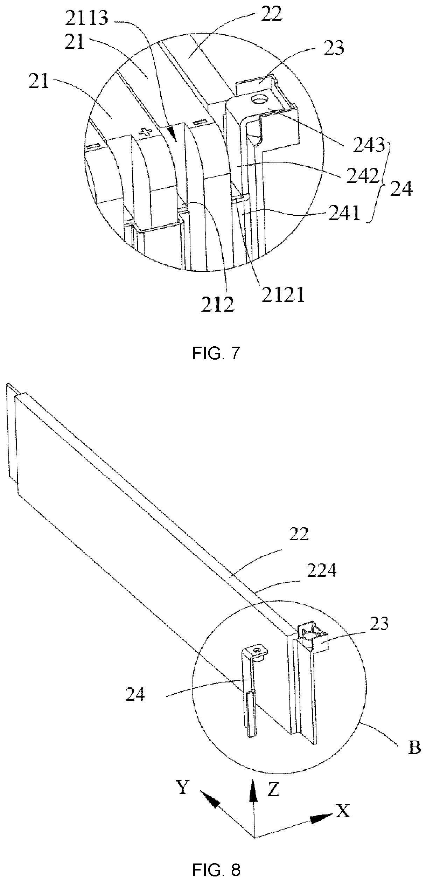

Referring to FIG. 3, and further referring to FIGS. 5 to 7, FIG. 5 is a structural schematic diagram of a battery cell and an output pole provided in some embodiments of the present disclosure; FIG. 6 is an assembly schematic diagram of an electrode terminal and a first wall provided in some embodiments of the present disclosure; and FIG. 7 is a partially enlarged view at position A of FIG. 3, where FIG. 7 illustrates an assembled state of the output pole with the battery cell and the fixing base. According to some embodiments of the present disclosure, the battery cell 21 comprises a casing 211 and an electrode terminal 212. The casing 211 is provided with a first wall 2111 facing the end plate 22, and the electrode terminal 212 is arranged on the first wall 2111. The electrode terminal 212 is provided with a first side surface 2121, and a plane in which the first side surface 2121 is located intersects the first wall 2111. The output pole 24 is connected to the first side surface 2121 of the electrode terminal 212 of the battery cell 21 closest to the end plate 22 in the battery cell group.

The casing 211 comprises a shell and a lid body, wherein the shell is provided with an opening and the lid body seals the opening so as to isolate the internal environment of the battery cell 21 from the external environment.

The shell is a component configured to cooperate with the lid body to form the internal environment of the battery cell 21. The formed internal environment can accommodate electrode assembly, electrolyte, and other components. The shell and the lid body can be independent components. The shell can be in various shapes and sizes. Specifically, the shape of the shell can be determined based on the specific shape and size of the electrode assembly. The material of the shell can vary, such as copper, iron, aluminum, stainless steel, aluminum alloy, plastic, etc. The embodiments of the present disclosure do not impose specific restrictions on this. The embodiments of the present disclosure describe a rectangular prism as an example of the shape of the shell.

The lid body refers to the component that covers the opening of the shell to isolate the internal environment of the battery cell 21 from the external environment. Without limitation, the shape of the lid body can be adapted to fit the shape of the shell to cooperate with the shell. Optionally, the lid body can be made of a material with a certain hardness and strength, such as aluminum alloy. In this way, the lid body is less likely to deform under compression or impact, allowing the battery cell 21 to have higher structural strength and safety performance can be improved. Functional components such as electrode terminals 212 can be arranged on the lid body. The electrode terminal 212 can be configured to establish electrical connections with the electrode assembly for outputting or inputting the electrical energy of the battery cell 21. The material of the lid body can vary, such as copper, iron, aluminum, stainless steel, aluminum alloy, plastic, etc. The embodiments of the present disclosure do not impose specific restrictions on this. In some embodiments, insulation structures can be arranged on the inner side of the lid body. The insulation structures can be configured to isolate the electrical connection components inside the shell from the lid body, thus reducing the risk of short circuits. Exemplarily, the material of the insulator can be plastics, rubber, and other similar materials.

The battery cell 21 further comprises an electrode assembly. The electrode assembly is the component within the battery cell 21 where electrochemical reactions occur. The shell can contain one or more electrode assemblies. The electrode assembly is primarily formed by winding or stacking the positive electrode sheet and the negative electrode sheet, and typically, there is a separator arranged between the positive electrode sheet and the negative electrode sheet. The separator is configured to separate the positive electrode sheet and positive electrode sheet, thus preventing internal short circuits between the positive electrode sheet and positive electrode sheet. The portions of the positive electrode sheet and negative electrode sheet that contain the active material constitute the main body part of the battery cell component, and the portions of the positive electrode sheet and negative electrode sheet that do not contain the active material each constitute the electrode tab. The positive electrode tab and the negative electrode tab can be located at one end of the main body part or separately at the two ends of the main body part. During the charging and discharging process of the battery 100, the positive electrode active material and the negative electrode active material undergo reactions with the electrolyte. The tab is connected to the electrode terminal 212 to form an electrical circuit.

The first wall 2111 is the wall of the casing 211 facing the end plate 22, and the first wall 2111 can be perpendicular to the first direction X. The first wall 2111 can be the lid body, or the first wall 2111 can be a wall of the shell. Optionally, the first wall 2111 is the lid body to facilitate the assembly of the electrode terminal 212 with the first wall 2111.

The electrode terminal 212 is mounted on the first wall 2111. The electrode terminal 212 is provided with a first side surface 2121 and a first end surface. The first end surface is the surface of the electrode terminal 212 away from the first wall 2111, and the plane of the first side surface 2121 intersects with both the first wall 2111 and the first end surface.

As shown in FIG. 6, the plane of the first side surface 2121 intersects with the first wall 2111. The plane of the first side surface 2121 can be parallel to the thickness direction of the first wall 2111, or the plane of the first side surface 2121 can be inclined with respect to the thickness direction of the first wall 2111. For example, the angle θ between the plane of the first side surface 2121 and the first wall 2111 can be in the range of 60° to 120°. Preferably, the angle θ between the plane of the first side surface 2121 and the first wall 2111 can be in the range of 85° to 95°. Preferably, the plane of the first side surface 2121 can be perpendicular to the first wall 2111, meaning that the plane of the first side surface 2121 is parallel to the thickness direction of the first wall 2111, thus facilitating the connection between the first side surface 2121 and the output pole 24.

The first side surface 2121 can be welded to the output pole 24 so as to ensure a secure connection between the output pole 24 and the electrode terminal 212.

In the above embodiment, the output pole 24 is connected to the first side surface 2121 of the electrode terminal 212 so as to facilitate the electrical connection between the output pole 24 and the battery cell group.

Referring to FIG. 3, and further referring to FIGS. 5 to 7, according to some embodiments of the present disclosure, the output pole 24 comprises a first segment 241, a second segment 242, and a third segment 243. The first segment 241 is connected to the first side surface 2121 of the electrode terminal 212 of the battery cell 21 closest to the end plate 22 in the battery cell group. The third segment 243 is fixed to the fixing base 23, and the second segment 242 connects the first segment 241, and the third segment 243.

The second segment 242 connects the first segment 241 and the third segment 243. The second segment 242 can be integrally molded with the first segment 241 and the third segment 243, such as by stamping or bending; alternatively, the second segment 242 can be separately arranged from the first segment 241 and the third segment 243, wherein the first segment 241 and the third segment 243 are welded or riveted individually to the second segment 242 to be secured in one; or the second segment 242 is integrally molded with the first segment 241, and the second segment 242 is separately arranged from the third segment 243, wherein the second segment 242 is welded or riveted to the third segment 243 to be secured in one; or the second segment 242 is integrally molded with the third segment 243, and the second segment 242 is separately arranged from the first segment 241, wherein the second segment 242 is welded or riveted to the first segment 241 to be secured in one.

The first segment 241 is connected to the first side surface 2121 of the electrode terminal 212 of the battery cell 21 closest to the end plate 22 in the battery cell group so as to allow the first segment 241 to have a smaller dimension in the first direction X and to facilitate the electrical connection between the output pole 24 and the battery cell group. The third segment 243 is fixed to the fixing base 23 so as to facilitate the assembly of the output pole 24 with the fixing base 23.

Referring to FIG. 5, according to some embodiments of the present disclosure, the first segment 241 extends from one end of the second segment 242 in a width direction, and the third segment 243 extends from one end of the second segment 242 in a length direction. The width direction of the second segment 242 and the length direction of the second segment 242 intersect the first direction X two by two.

The form of the two-by-two intersection between the width direction of the second segment 242, the length direction of the second segment 242, and the first direction X can take various forms. For example, the width direction of the second segment 242 can be perpendicular to the length direction of the second segment 242, or the width direction of the second segment 242 and the length direction of the second segment 242 can be non-perpendicular to the first direction X; alternatively, the width direction of the second segment 242 can be perpendicular to the first direction X, or the width direction of the second segment 242 and the first direction X can be non-perpendicular to the length direction of the second segment 242; or the length direction of the second segment 242 can be perpendicular to the first direction X, or the length direction of the second segment 242 and the first direction X can be non-perpendicular to the width direction of the second segment 242; or the width direction of the second segment 242 and the length direction of the second segment 242 can be mutually perpendicular to the first direction X.

Optionally, the width direction of the second segment 242 and the length direction of the second segment 242 can be mutually perpendicular to the first direction X. In the drawing, the width direction of the second segment 242 can be parallel to the direction indicated by the letter Y, and the length direction of the second segment 242 can be parallel to the direction indicated by the letter Z.

The thickness direction of the second segment 242 can be parallel to the first direction X. In other words, the second segment 242 can be oriented towards the battery cell group.

The first segment 241 and the third segment 243 can be located on both sides of the thickness direction of the second segment 242. For example, the first segment 241 extends from one end of the width direction of the second segment 242 towards the battery cell group, and the extension direction of the first segment 241 intersects with the plane where the surface of the second segment 242 facing the battery cell group is located; the third segment 243 extends from one end of the length direction of the second segment 242 towards the direction away from the battery cell group, and the extension direction of the third segment 243 intersects with the plane where the surface of the second segment 242 away from the battery cell group is located.

In the above solution, the first segment 241 extends from one end of the second segment 242 in the width direction so as to facilitate the connection of the first segment 241 to the battery cell group. The third segment 243 extends from one end of the second segment 242 in the length direction, making efficient use of assembly space and facilitating the assembly process.

According to some embodiments of the present disclosure, the first segment 241 is perpendicular to the second segment 242, and/or the third segment 243 is perpendicular to the second segment 242.

According to different requirements, the first segment 241, the second segment 242, and the third segment 243 form different structures. For example, the first segment 241 can be perpendicular to the second segment 242, or the third segment 243 can be perpendicular to the second segment 242, or the first segment 241 and the third segment 243 can be perpendicular to the second segment 242, respectively.

The first segment 241 is perpendicular to the second segment 242, and the extension direction of the first segment 241 is perpendicular to the plane where the surface of the second segment 242 facing the battery cell group is located. The third segment 243 is perpendicular to the second segment 242, and the extension direction of the third segment 243 is perpendicular to the plane where the surface of the second segment 242 away from the battery cell group is located.

When the first segment 241, the second segment 242, and the third segment 243 are integrally molded, the first segment 241 can be bent relative to the second segment 242 to make the first segment 241 perpendicular to the second segment 242; the third segment 243 can be bent relative to the second segment 242 to make the third segment 243 perpendicular to the second segment 242.

In the above solution, the first segment 241 is perpendicular to the second segment 242, and/or the third segment 243 is perpendicular to the second segment 242, which is simple in structure and easy to process and manufacture.

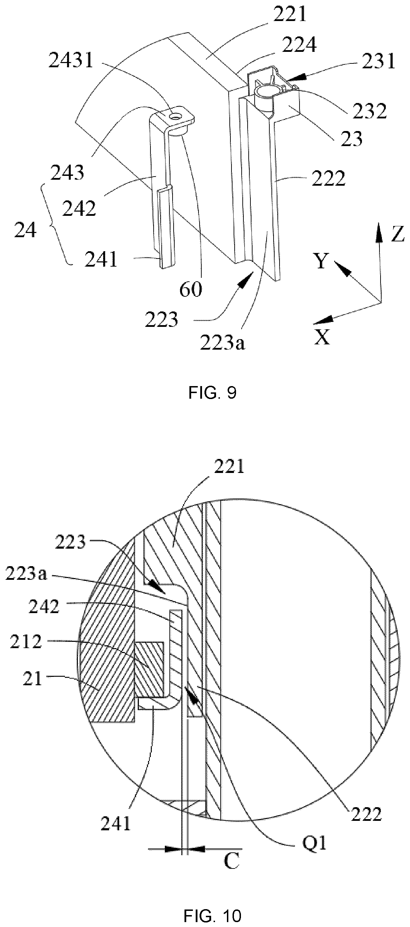

Referring to FIG. 7, and further referring to FIGS. 8 to 10, FIG. 8 is a structural schematic diagram of the output pole and the end plate provided in some embodiments of the present disclosure; FIG. 9 is a partially enlarged view at position B of FIG. 8; and FIG. 10 is a partial schematic diagram of the cooperative state of the output pole and the end plate provided in some embodiments of the present disclosure. According to some embodiments of the present disclosure, a first groove 223 is provided on a side of the end plate 22 facing the battery cell group, and at least a portion of the second segment 242 is arranged within the first groove 223.

The first groove 223 is a recessed structure arranged on the side of the end plate 22 facing the battery cell group. In a local region on the side of the end plate 22 facing the battery cell group, the first groove 223 is formed by recessing in a direction away from the battery cell group.

A portion of the second segment 242 can be arranged within the first groove 223, and another portion of the second segment 242 can be arranged outside the first groove 223; alternatively, all parts of the second segment 242 can be arranged within the first groove 223.

In the above embodiment, at least a portion of the second segment 242 is provided in the first groove 223, which rationally utilizes the assembly space and reduces the space occupation so as to make the battery module 20 com pact.

According to some embodiments of the present disclosure, the groove bottom surface 223a of the first groove 223 can be perpendicular to the first direction X.

Referring to FIG. 10, according to some embodiments of the present disclosure, the second segment 242 is parallel to a groove bottom surface 223a of the first groove 223.

The second segment 242 can be a plate-like structure, which is simple in design.

The second segment 242 is parallel to the bottom surface 223a of the first groove 223. The surface having a larger area of the second segment 242 can be parallel to the groove bottom surface 223a of the first groove 223. For example, the plane formed by the length direction and the width direction of the second segment 242 can be parallel to the groove bottom surface 223a of the first groove 223. In other words, the length direction and the width direction of the second segment 242, respectively, can be parallel to the groove bottom surface 223a of the first groove 223.

In the above embodiment, the second segment 242 is parallel to a groove bottom surface 223a of the first groove 223 so as to facilitate the assembly of the second segment 242 and the end plate 22, and thus the assembly of the second segment 242 and the end plate 22 is more efficient.

Referring to FIG. 10, according to some embodiments of the present disclosure, along the first direction X, a first gap Q1 is arranged between the second segment 242 and the groove bottom surface 223a of the first groove 223.

The second segment 242 is provided with a second surface facing the groove bottom surface 223a of the first groove 223. When the plane where the second surface is located intersects the plane where the groove bottom surface 223a of the first groove 223 is located, the first gap Q1 can be the minimum distance between the second surface and the groove bottom surface 223a of the first groove 223. When the second surface is parallel to the groove bottom surface 223a of the first groove 223, the first gap Q1 is the distance between the second surface and the first groove 223 in the first direction X.

In the above solution, a first gap Q1 provided between the second segment 242 and the groove bottom surface 223a of the first groove 223 facilitates the assembly of the second segment 242 with the end plate 22, reducing the risk of interference between the second segment 242 and the groove bottom surface 223a of the first groove 223.

Referring to FIG. 10, according to some embodiments of the present disclosure, the size of the first gap Q1 is C, satisfying: 1 mm ≤ C ≤ 5mm.

The dimension C of the first gap Q1 is the dimension of the first gap Q1 in the first direction X.

Optionally, the dimension C of the first gap Q1 can be 1 mm, 1.5 mm, 2 mm, 2.5 mm, 3 mm, 3.5 mm, 4 mm, 4.5 mm, or 5 mm.

The size C of the first gap Q1 satisfies 1mm≤C≤5mm, which is able to reduce the risk of interference between the second segment 242 and the groove bottom surface 223a of the first groove 223 and to occupy a relatively small assembly space. If the first gap Q1 is too small (e.g., less than 1 mm), it can easily lead to interference between the second segment 242 and the groove bottom surface 223a of the first groove 223. If the first gap Q1 is too large (e.g., greater than 5 mm), it makes the output pole 24 occupy a larger assembly space after assembly with the end plate 22, causing space wastage.

According to some embodiments of the present disclosure, 2.5mm≤C≤3.5mm.

Optionally, the dimension C of the first gap Q1 can be 2.5 mm, 2.75 mm, 3 mm, 3.25 mm, or 3.5 mm.

In the above solution, compared to 1 mm ≤ C ≤ 5mm, when 2.5mm ≤ C ≤ 3.5mm, the risk of interference between the second segment 242 and the groove bottom surface 223a of the first groove 223 is further reduced, and it occupies a smaller assembly space.

Referring to FIG. 9 and FIG. 10, according to some embodiments of the present disclosure, the first groove 223 extends along the second direction, and the fixing base 23 is provided at one end of the first groove 223 along the second direction. The second direction intersects the first direction X.

The second direction intersects the first direction X, and the extension direction of the first groove 223 can be determined according to different requirements. Optionally, the second direction can be parallel to the direction indicated by the letter Z, meaning the second direction can be perpendicular to the first direction X.

The first groove 223 extends along the second direction. The first groove 223 can extend from one end of the edge of the end plate 22 located in the second direction towards the other end. Alternatively, the first groove 223 can extend along the second direction between the two ends of the end plate 22 located in the second direction. Optionally, the first groove 223 can extend from one end of the edge of the end plate 22 located in the second direction towards the other end so as to facilitate process and manufacture.

The fixing base 23 is provided at one end of the first groove 223 along the second direction, wherein the projection of the fixing base 23 does not fall into the first groove 223 in the plane perpendicular to the second direction.

In the above solution, the fixing base 23 is provided at one end of the first groove 223 along the second direction, which facilitates processing and manufacturing.

Referring to FIG. 9 and FIG. 10, according to some embodiments of the present disclosure, the end plate 22 comprises an end plate body 221 and an extending portion 222. The extending portion 222 extends from one end of the end plate body 221 along a third direction, and the thickness of the extending portion 222 is less than the thickness of the end plate body 221 so that A first groove 223 is formed on one side of the end plate 22, away from the first surface 224. The fixing base 23 is arranged at one end of the extending portion 222 along the second direction. The third direction, the second direction, and the first direction X intersect with each other two by two.

The third direction, the second direction, and the first direction X can intersect with each other two by two in various ways. For example, the third direction can be perpendicular to the second direction, and the third direction and the second direction can be non-perpendicular to the first direction X. Alternatively, the third direction can be perpendicular to the first direction X, and the third direction and the first direction X can be non-perpendicular to the second direction. Alternatively, the second direction can be perpendicular to the first direction X, and the second direction and the first direction X can be non-perpendicular to the third direction. Alternatively, the third direction, the second direction, and the first direction X can be mutually perpendicular.

Optionally, the third direction, the second direction, and the first direction X can be mutually perpendicular. In the drawing, the third direction can be parallel to the direction indicated by the letter Y.

The second direction and the third direction can both be parallel to the groove bottom surface 223a of the first groove 223.

The end plate body 221 and the extending portion 222 are two components constituting the end plate 22. The extending portion 222 extends from one end of the end plate body 221 along the third direction. The extending portion 222 and the end plate body 221 can be integrally molded. For example, the extending portion 222 and the end plate body 221 can be integrally molded through injection molding. Alternatively, the end plate 22 can be thinned from one end along the third direction to form the first groove 223 so as to divide the end plate 22 into the end plate body 221 and the extending portion 222.

The end plate body 221 can be the thicker part of the end plate 22, and the extending portion 222 can be the thinner part of the end plate 22.

The thickness direction of the end plate 22 can be parallel to the first direction X. The thickness of the extending portion 222 can be the dimension of the extending portion 222 in the first direction X, and the thickness of the end plate body 221 can be the dimension of the end plate body 221 in the first direction X.

In the above solution, the connection between the extending portion 222 and the end plate body 221 forms the first groove 223, which is a simple structure that is easy to manufacture. Due to the smaller thickness of the extending portion 222 compared to the thickness of the end plate body 221, arranging the fixing base 23 at one end of the extending portion 222 along the second direction allows for a reduced thickness of the end plate body 221. This, in turn, decreases the space occupied by the end plate 22 in the first direction X.

According to some embodiments of the present disclosure, the surface located within the first groove 223 at the connection of the end plate body 221 and the extending portion 222 can be an arcuate surface.

Referring to FIGS. 9 and 10, according to some embodiments of the present disclosure, along the second direction, one end of the fixing base 23 is arranged on a portion of the end plate body 221 that extends beyond the extending portion 222.

One end of the fixing base 23 is arranged, along the second direction, on a portion of the end plate body 221 that extends beyond the extending portion 222. The end plate body 221 has a partially overlapping region with the fixing base 23 in the second direction.

In the above solution, along the second direction, the portion of the end plate body 221 that extends beyond the extending portion 222 is provided with one end of the fixing base 23, which ensures that the structure, after the cooperation of the fixing base 23 with the extending portion 222, occupies a smaller space in the second direction, thus reducing the space occupied by the battery module 20 in the second direction.

Referring to FIG. 4, according to some embodiments of the present disclosure, a side of the extending portion 222 away from the battery cell group is coplanar with a side of the end plate body 221 away from the battery cell group.

One side of the extending portion 222 away from the battery cell group is coplanar with one side of the end plate body 221 away from the battery cell group, which means that the surface on the side of the extending portion 222 away from the battery cell group is coplanar with the surface on the side of the end plate body 221 away from the battery cell group.

In the above solution, the surface of one side of the extending portion 222 away from the battery cell group is coplanar with the surface of one side of the end plate body 221 away from the battery cell group. In other words, the surface of the end plate 22 on the side away from the battery cell group is a flat surface, facilitating the coordination of the battery module 20 with other components.

Referring to FIGS 5 and 7, according to some embodiments of the present disclosure, the casing 211 is also provided with a second wall 2112 arranged opposite to the first wall 2111. The first region at an edge of the second wall 2112 is recessed to form a second groove 2113, wherein the second groove 2113 is configured to accommodate the electrode terminal 212 of the battery cell 21 adjacent to the second wall 2112.

The second wall 2112 is arranged opposite the first wall 2111 along the first direction X. The first region is a region of the edge of the second wall 2112, and along the first direction X, the first region corresponds to the region of the first wall 2111 where the electrode terminal 212 are mounted. The first region is recessed along the first direction X toward the first wall 2111 to form a second groove 2113.

In some embodiments, the recessed depth of the second groove 2113 is greater than the height of the electrode terminal 212 protruding from the first wall 2111. It is understood that the electrode terminal 212 of the battery cell 21 adjacent to the second wall 2112 can also be only partially accommodated within the second groove 2113.

The surface of the second wall 2112 can be provided with insulation structures to facilitate insulation and isolation between the second wall 2112 and the electrode terminals 212 of adjacent battery cells 21 when multiple battery cells 21 are arranged in a stack. The insulation structure can also be provided on the surface of the electrode terminal 212 away from the first wall 2111 so as to facilitate, when multiple battery cells 21 are arranged in a stack, the insulation and isolation between the electrode terminal 212 and the second wall 2112 of the battery cell 21, adjacent to the first wall 2111.

In the above solution, when multiple battery cells 21 are stacked, the providing of the second groove 2113 allows for the accommodation of the electrode terminal 212 of the battery cell 21 adjacent to the second wall 2112. Reasonably utilizing the assembly space ensures that the battery module 20 is compact and the battery module 20 has a higher energy density.

According to some embodiments of the present disclosure, the casing 211 is provided with a first wall 2111 and a second wall 2112 arranged opposite to each other along the first direction X, a third wall (not shown in the figure), and a fourth wall (not shown in the figure) arranged opposite to each other along the second direction, and a fifth wall (not shown in the figure) and a sixth wall (not shown in the figure) arranged opposite to each other along the third direction. The area of the third wall and the area of the fourth wall are both smaller than the area of the first wall 2111; the area of the third wall and the area of the fourth wall are both smaller than the area of the second wall 2112; the area of the fifth wall and the area of the sixth wall are both smaller than the area of the first wall 2111; and the area of the fifth wall and the area of the sixth wall are both smaller than the area of the second wall 2112. The first direction X, the second direction, and the third direction intersect with each other two by two.

The third direction, the second direction, and the first direction X can intersect with each other two by two in various ways. For example, the third direction can be perpendicular to the second direction, and the third direction and the second direction can be non-perpendicular to the first direction. Alternatively, the third direction can be perpendicular to the first direction, and the third direction and the first direction can be non-perpendicular to the second direction. Alternatively, the second direction can be perpendicular to the first direction X, and the second direction and the first direction X can be non-perpendicular to the third direction. Alternatively, the third direction, the second direction, and the first direction X can be mutually perpendicular. Optionally, the third direction, the second direction, and the first direction X can be mutually perpendicular.

The first wall 2111, the second wall 2112, the third wall, the fourth wall, the fifth wall, and the sixth wall constitute the walls of the casing 211, wherein these walls enclose the space for accommodating the electrode assembly.

In the above solution, the first wall 2111 and the second wall 2112 are the walls with a larger area of the casing 211. The first wall 2111 is perpendicular to the first direction X so as to facilitate a compact structure of the battery cell group, thus enabling a higher energy density in the battery module 20.

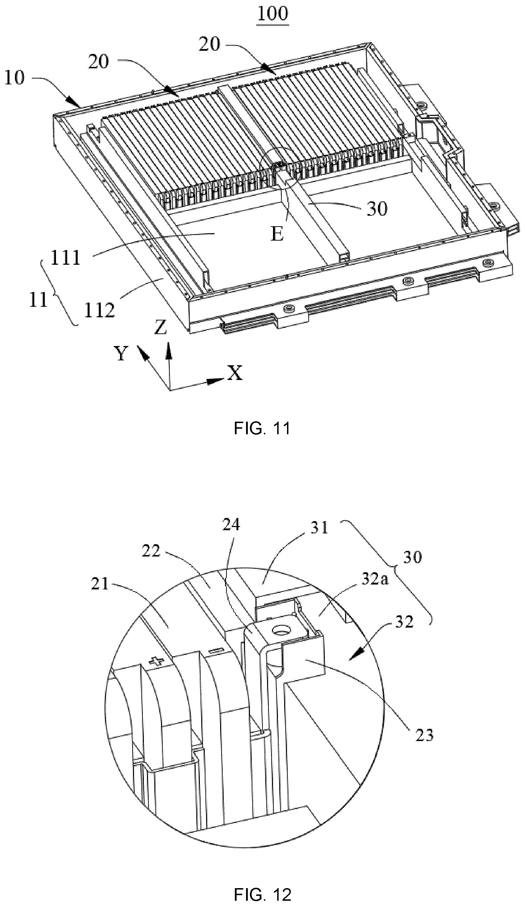

Referring to FIGS. 11 and 12, FIG. 11 is a structural schematic diagram of a battery provided in some embodiments of the present disclosure, and for ease of description, the second sub-box is not shown in FIG. 11; FIG. 12 is an assembly schematic diagram of the fixing base and the partition beam provided in some embodiments of the present disclosure, and FIG. 12 shows a schematic diagram of the partial structure of FIG. 11. According to some embodiments of the present disclosure, the battery 100 also comprises a partition beam 30. The partition beam 30 is arranged inside the box 10. Along the first direction X, the end plate 22 is located between the battery cell group and the partition beam 30, and the fixing base 23 is arranged on the partition beam 30.

The partition beam 30 is a component arranged inside the box 10. The partition beam 30 is configured to partition multiple spaces within the box 10. These spaces can accommodate the battery cell group and other components separately, such as wiring harnesses. At the same time, the partition beam 30 is provided within the box 10, which also improves the overall strength of the box 10.

The arranging location of the partition beam 30 and the battery module 20 within the box 10 can take various forms. Different arranging locations can be provided according to different needs, for example, the partition beam 30 can be located on the side of the battery module 20 along the first direction X. Alternatively, along the first direction X, the battery modules 20 are provided on both sides of the partition beam 30.

The material of the partition beam 30 can be the same as the material of the box 10 or can be different from the material of the box 10. The material of the partition beam 30 can be aluminum, aluminum alloy, stainless steel, etc., with high strength.

In the above solution, the end plate 22 is arranged between the battery cell group and the partition beam 30 so as to facilitate the isolation of the battery cell group from the partition beam 30 and to reduce the risk of short-circuiting of the battery cell group in contact with the partition beam 30. The fixing base 23 is arranged on the partition beam 30, which, on one hand, allows the end plate 22 to have a thinner thickness, thus reducing the space occupancy of the end plate 22 in the first direction X and increasing space utilization within box 10 and enabling the battery 100 to have a high energy density. On the other hand, it facilitates the positioning and the support for the fixing base 23.

Referring to FIG. 11, according to some embodiments of the present disclosure, the box 10 comprises a bottom wall 111 and side walls 112. The side walls 112 surround the bottom wall 111, and the partition beam 30 is arranged on the bottom wall 111. The partition beam 30 extends along the third direction. The third direction, the thickness direction of the bottom wall 111, and the first direction X intersect with each other two by two.

The third direction, the thickness direction of the bottom wall 111, and the first direction X can intersect with each other two by two in various ways. For example, the third direction can be perpendicular to the thickness direction of the bottom wall 111, and the third direction and the thickness direction of the bottom wall 111 can be non-perpendicular to the first direction X. Alternatively, the third direction can be perpendicular to the first direction X, and the third direction and the first direction X can be non-perpendicular to the thickness direction of the bottom wall 111. Alternatively, the thickness direction of the bottom wall 111 can be perpendicular to the first direction X, and the thickness direction of the bottom wall 111 and the first direction X can be non-perpendicular to the third direction. Alternatively, the third direction, the thickness direction of the bottom wall 111, and the first direction X can be mutually perpendicular.

Optionally, the third direction and the thickness direction of the bottom wall 111 can be mutually perpendicular to the first direction X. The third direction can be parallel to the direction indicated by the letter Y, and the thickness direction of the bottom wall 111 can be parallel to the direction indicated by the letter Z.

The third direction can be a width direction of the box 10, or, the third direction can be a length direction of the box 10. Optionally, the third direction, the thickness direction of the bottom wall 111, and the first direction X can be mutually perpendicular.

The side walls 112 and the bottom wall 111 enclose a space for accommodating the battery cell group, and the partition beam 30 is provided within the space. The side walls 112 can be provided at the edges of the bottom wall 111 so that the space enclosed by the side walls 112 and the bottom wall 111 has a larger capacity.

The connection between the side walls 112 and the bottom wall 111 can take various forms. For example, the side walls 112 and the bottom wall 111 can be integrally molded, for example, the side walls 112 and the bottom wall 111 are extruded from aluminum. Alternatively, the side walls 112 and the bottom wall 111 can be separately arranged and welded together.

The partition beam 30 is provided in the bottom wall 111, and the partition beam 30 can be welded to the bottom wall 111 to make a stable connection between the partition beam 30 and the bottom wall 111. When the partition beam 30 is welded to the bottom wall 111, the material of the partition beam 30 can be the same as the material of the bottom wall 111 so as to facilitate the welding of the partition beam 30 to the bottom wall 111.

The partition beam 30 extends along the third direction. The dimensions of the partition beam 30 in the third direction are larger than the dimensions of the partition beam 30 in the other directions. The length direction of the divider beam 30 can be parallel to the third direction, and the thickness direction of the partition beam 30 can be parallel to the first direction X.

Opposite ends of the partition beam 30 along the third direction can be separately connected to the side walls 112, resulting in a larger area of connection between the partition beam 30 and the box 10 and a stable connection between the divider beam 30 and the box 10. Two ends of the partition beam 30 can be welded to the side walls 112, allowing the partition beam 30 to be firmly connected to the side walls 112 and improving the overall strength of the box 10.

In the above solution, the side walls 112 and bottom wall 111 define a space for accommodating the battery cell group. The partition beam 30 is arranged on the bottom wall 111 so as to ensure a stable connection between the partition beam 30 and the box 10, thus facilitating the fixation of the fixing base 23 on the partition beam 30. The partition beam 30 extends along the third direction so as to allow for a smaller dimension of the partition beam 30 in the first direction X, thus reducing the space occupied by the partition beam 30 in the first direction X and enabling a higher space utilization rate within the box 10.

Referring to FIG. 12, according to some embodiments of the present disclosure, the partition beam 30 comprises a top surface 31 away from the bottom wall 111. The partition beam 30 is provided with a third groove 32 that is recessed from the top surface 31 towards the bottom wall 111. At least a portion of the fixing base 23 is provided in the third groove 32.

The top surface 31 is the surface of the partition beam 30 away from the bottom wall 111. The partition beam 30 also includes a bottom surface (not shown in the figure) facing the bottom wall 111. The bottom surface is arranged opposite to the top surface 31 along the thickness direction of the bottom wall 111. The bottom surface can be in contact with the bottom wall 111, providing better support of the bottom wall 111 to the partition beam 30.

The third groove 32 is a recess formed from the top surface 31 towards the bottom wall 111. The depth direction of the third groove 32 extends from the top surface 31 towards the bottom wall 111. The profile of the third groove 32 is similar to the profile of the fixing base 23 so as to facilitate the accommodation of at least a portion of the fixing base 23 within the third groove 32.

The assembly method of the fixing base 23 with the third groove 32 can be selected based on the actual situation. For instance, a portion of the fixing base 23 can be provided within the third groove 32, or the entire fixing base 23 can be arranged within the third groove 32.

In the above solution, the third groove 32 provides a space for accommodating the fixing base 23. At least a portion of the fixing base 23 is provided in the third groove 32, which is able to reduce the space occupied by the fixing base 23 in the thickness direction of the bottom wall 111 after assembly with the partition beam 30. This decreases the impact of the fixing base 23 on the space utilization rate within the box 10 so as to enable a higher energy density in the battery 100.

According to some embodiments of the present disclosure, the fixing base 23 does not protrude from the top surface 31.

The fixing base 23 not protruding from the top surface 31 means that, in the thickness direction of the bottom wall 111, the fixing base 23 does not extend beyond the top surface 31. Specifically, when the fixing base 23 is assembled with the partition beam 30, the entirety of the fixing base 23 is located within the third groove 32. The surface of the fixing base 23 away from the bottom wall 111 is below the top surface 31, or, the surface of the fixing base 23 away from the bottom wall 111 is coplanar with the top surface 31.

In the above solution, the fixing base 23 does not protrude from the top surface 31. After the fixing base 23 is mounted on the partition beam 30, it does not occupy additional space in the thickness direction of the bottom wall 111, and thus the impact on the energy density of the battery 100 is reduced.

Referring to FIG. 12, according to some embodiments of the present disclosure, the fixing base 23 is in contact with the groove bottom surface 32a of the third groove 32.

The fixing base 23 is provided with a surface facing the groove bottom surface 32a of the third groove 32, wherein the surface is in contact with the groove bottom surface 32a of the groove bottom surface 32.

In the above solution, the contact between the fixing base 23 and the groove bottom surface 32a of the third groove 32 facilitates the support for the fixing base 23 by the groove bottom surface 32a of the third groove 32 so as to achieve the positioning assembly of the fixing base 23 with the partition beam 30.

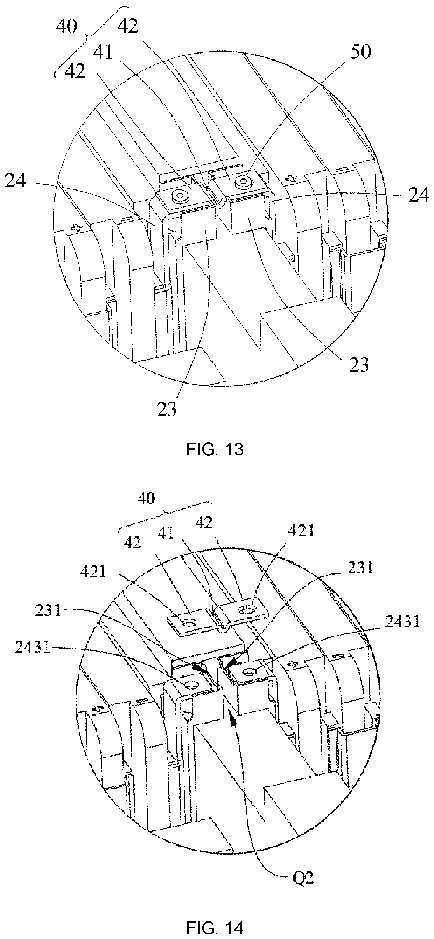

Referring to FIG. 11, and further referring to FIG. 13, FIG. 13 is a partially enlarged view at position E of FIG. 11. According to some embodiments of the present disclosure, the partition beam 30 is provided with the battery modules 20 on both sides along the first direction X. The battery 100 also comprises a busbar component 40, wherein the busbar component 40 is connected to the output poles 24 of the two battery modules 20 located on both sides of the partition beam 30.

The partition beam 30 is provided with the battery module 20 on each side along the first direction X. For example, one battery module 20 is arranged on each side of the partition beam 30 along the first direction X, and these two battery modules 20 are arranged adjacent to the partition beam 30.

The busbar assembly 40 serves as a conductive component, and the busbar component 40 is configured to enable the electrical connection of the output poles 24 of the two battery modules 20 on both sides of the partition beam 30. The material of the busbar component 40 can be copper, aluminum, etc.

In the above solution, the electrical connection of the output poles 24 of the two battery modules 20 located on both sides of the partition beam 30 is enabled by the busbar component 40, which is easy to assemble.

Referring to FIGS. 11 and 13, according to some embodiments of the present disclosure, the fixing base 23 of the two battery modules 20 are arranged along the first direction X.

The two battery modules 20 are both adjacent to the partition beam 30, and each battery module 23 of the battery module 20 is located on the side of the battery module 20 facing the partition beam 30. The fixing bases 23 of the two battery modules 20 are arranged along the first direction X, and the two fixing bases 23 are arranged opposite each other so as to enable a relatively small distance between the two fixing bases 23 and facilitate the connection of the busbar component 40 to the output pole 24 fixed on the fixing base 23.

In the above solution, the fixing bases 23 of the two battery modules 20 are arranged along the first direction X so as to facilitate the connection of the busbar component 40 to the output poles 24 of the two battery modules 20 and make assembly more convenient.

Referring to FIGS. 11 and 13, and further referring to FIG. 14, FIG. 14 is a structural schematic diagram of a busbar component and a fixing base provided in some embodiments of the present disclosure. According to some embodiments of the present disclosure, an avoidance portion 231 is provided on the side where the fixing bases 23 of the two battery modules 20 are close to each other, and the avoidance portion 231 is configured to avoid the busbar component 40.

The avoidance portion 231 can be a recess arranged on the side of the fixing base 23 close to another fixing base 23, and a portion of the busbar component 40 can be accommodated within the recess.

The avoidance portion 231 can be arranged at the edge of the end of the fixing base 23 away from the bottom wall 111. On the one hand, it facilitates process and manufacture, and on the other hand, it facilitates the assembly of the busbar component 40 with the fixing base 23.

In the above solution, the avoidance of the busbar component 40 by the avoidance portion 231 makes the busbar component 40 and the fixing base 23 compact and reduces space occupation.

Referring to FIG. 14, according to some embodiments of the present disclosure, along the first direction X, a second gap Q2 is provided between the fixing bases 23 of the two battery modules 20.

After the fixing base 23 is arranged on the partition beam 30, a second gap Q2 is provided between the fixing bases 23 of the two battery modules 20 on both sides of the partition beam 30 along the first direction X. The fixing bases 23 of the two battery modules 20 do not contact, thus reducing the risk of interference between the fixing bases 23 of the two battery modules 20.

Referring to FIGS. 13 and 14, according to some embodiments of the present disclosure, the busbar component 40 comprises a bent portion 41 and two connecting portions 42. The two connecting portions 42 are respectively connected to the output poles 24 of the two battery modules 20 (referring to FIG. 11), and the bent portion 41 is connected to the two connecting portions 42.

The bent portion 41 connects two connecting portions 42, and the two connecting portions 42 can be arranged at the opposite two ends of the bent portion 41.

The bent portion 41 and the two connecting portions 42 can be integrally molded, for example, the bent portion 41 and the two connecting portions 42 can be molded by stamping.

The bent portion 41 is the part of the busbar component 40 having a bent structure, and the bent portion 41 can protrude from one side of the busbar component 40 to the other side along the thickness direction of the busbar component 40. For example, the busbar component 40 can be a flat piece, and a local region between the two ends of the flat piece can be bent to form the bent portion 41. The thickness direction of the busbar component 40 can be parallel to the direction indicated by the letter Z.

The connecting portion 42 is the part of the busbar component 40 configured to connect with the output pole 24. During assembly, the connecting portion 42 is connected to the corresponding output pole 24 of the battery module 20 to achieve an electrical connection between the busbar component 40 and the output pole 24.

In the above solution, when the battery 100 experiences vibration, the bent portion 41 can absorb the stress applied to the busbar component 40, reducing the probability of movement of the connecting portion 42 relative to the output poles 24. This ensures a reliable connection between the connecting portions 42 and the corresponding output poles 24 of the battery modules 20.

Referring to FIGS. 13 and 14, according to some embodiments of the present disclosure, the two connecting portions 42 can be arranged at the two ends of the busbar component 40 in the length direction. The bent portion 41 is located between the two connecting portions 42, and the bent portion 41 extends through the busbar component 40 along the width direction of the busbar component 40. The length direction of the busbar component 40 is parallel to the first direction X (referring to FIG. 11), and the width direction of the busbar component 40 is parallel to the third direction.

Referring to FIGS. 13 and 14, according to some embodiments of the present disclosure, the output pole 24 includes a first connecting hole 2431, and the busbar component 40 includes two through-holes 421. The two through-holes 421 are respectively arranged to correspond to the first connecting holes 2431 of the two output poles 24 of the two battery modules 20 on both sides of the partition beam 30. The battery 100 also includes fasteners 50, and the busbar component 40 and the output pole 24 of the corresponding battery module 20 are connected by fasteners 50 inserted into the through-holes 421 and the first connecting holes 2431.

The first connecting hole 2431 can be a threaded hole or a through-hole. The first connecting hole 2431 is configured for the insertion of the fastener 50.

The through-hole 421 is correspondingly arranged with the first connecting hole 2431. The fastener 50 can be inserted into the through-hole 421 and the first connecting hole 2431 corresponding to the through-hole 421, thus securing the busbar component 40 to the corresponding output pole 24 of the battery module 20.

In the above embodiment, the busbar component 40 is connected to the output pole 24 of the corresponding battery module 20 by fasteners 50, which is simple to operate and easy to assemble.

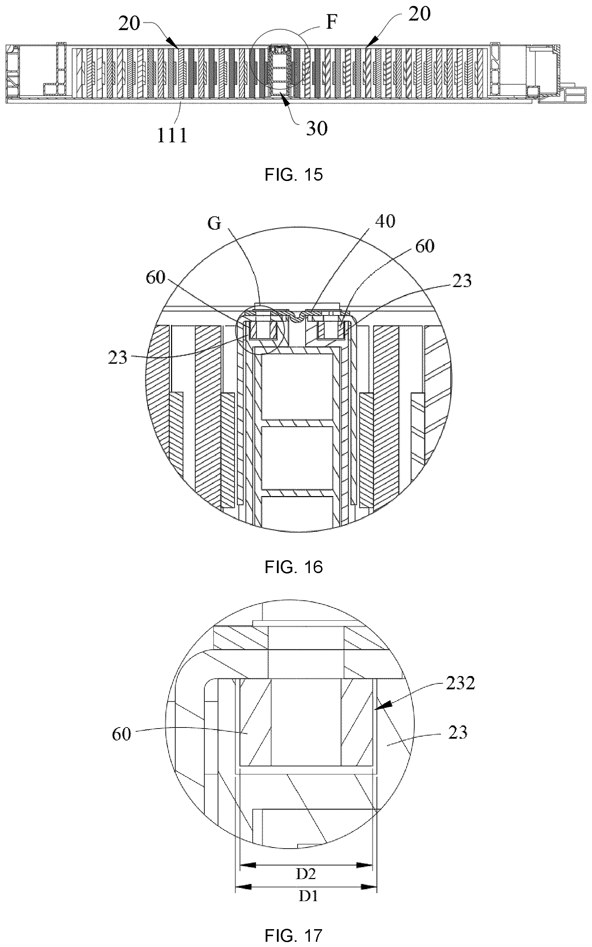

Referring to FIG. 9, and further referring to FIGS. 15 to 17, FIG. 15 is a cross-sectional view of the battery provided in some embodiments of the present disclosure; FIG. 16 is a partially enlarged view at position F of FIG. 15; and FIG. 17 is a partially enlarged view at position G of FIG. 16. According to some embodiments of the present disclosure, the battery 100 also includes a nut 60. The nut 60 is fixed on a side of the output pole 24 facing the fixing base 23. The threaded hole of the nut 60 is provided in correspondence with the first connecting hole 2431. The fixing base 23 is provided with a second connecting hole 232, and at least a portion of the nut 60 is positioned within the second connecting hole 232, and in a clearance fit with the second connecting hole 232. The fastener 50 (referring to FIG. 13) is inserted into the through-holes 421 and the first connecting hole 2431 and is threadedly connected with the nut 60.

The first connecting hole 2431 can be a through-hole.

The nut 60 is fixed to the output pole 24. The nut 60 can be welded to the output pole 24, or, the nut 60 can be riveted to the output pole 24.

The threaded hole of the nut 60 is correspondingly arranged with the first connecting hole 2431 so as to allow the fastener 50 to be inserted into the first connection hole 2431 and threadedly connected with the nut 60. The threaded hole of the nut 60 can be coaxially arranged with the first connecting hole 2431, or the center axis of the threaded hole of the nut 60 can be eccentrically arranged relative to the center axis of the first connecting hole 2431, as long as it ensures that fastener 50 can be inserted into the first connecting hole 2431 and the threaded hole of the nut 60 and threadedly connected with the nut 60.

The second connecting hole 232 is a hole provided in the fixing base 23 for cooperating with the nut 60. The nut 60 is secured to the side of the output pole 24 toward the fixing base 23 so as to allow the nut 60 to cooperate with the second connecting hole 232. A portion of the nut 60 is arranged within the second connecting hole 232 and another portion of the nut 60 is arranged outside the second connecting hole 232; alternatively, the entirety of the nut 60 is arranged within the second connecting hole 232.

The nut 60 is cooperated with the gap in the second connecting hole 232. After the nut 60 is arranged in the second connecting hole 232, the nut 60 can move relative to the fixing base 23 within the plane perpendicular to the central axis of the second connecting hole 232.

In the above solution, the convenient assembly is achieved by threadedly connecting the fastener 50 to the nut 60. Due to the cooperation of the nut 60 and the gap in the second connecting hole 232, during assembly, the position of the nut 60 within the second connecting hole 232 can be adjusted according to the actual situation to absorb machining errors. This facilitates the assembly of the busbar component 40, output pole 24, and fixing base 23.

Referring to FIG. 17, according to some embodiments of the present disclosure, a diameter of the second connecting hole 232 is D1, and an outer diameter of the nut 60 is D2, satisfying 2mm ≤ D1-D2 ≤ 8mm.

The outer diameter of the nut 60 refers to, the diameter of the outer circle of the nut 60, or, the diameter of the outer contour of the nut 60 when the outer contour is circular. For example, when the nut 60 is a hexagonal nut, the outer diameter of the nut 60 refers to the diameter of the outer circle of the nut 60. If the nut 60 is a circular nut, the outer diameter of the nut 60 refers to the diameter of the outer contour of the nut 60.

In some embodiments, the nut 60 is a circular nut and the second connecting hole 232 is a circular hole.

Optionally, D1-D2 can be 2mm, 2.5mm, 3mm, 3.5mm, 4mm, 4.5mm, 5mm, 5.5mm, 6mm, 6.5mm, 7mm, 7.5mm, or 8mm.

In the above solution, the diameter D1 of the second connecting hole 232 is greater than the outer diameter D2 of the nut 60. The difference between the diameter D1 of the second connecting hole 232 and the outer diameter D2 of the nut 60 satisfies 2mm ≤ D1-D2 ≤ 8mm, thus facilitating the absorption of machining errors and ensuring precise assembly of the busbar component 40 with the output pole 24. If D1-D2 is too small (e.g., less than 2mm), it is prone to lead to interference during the assembly of the nut 60 with the fixing base 23. If D1-D2 is too large (e.g., greater than 8mm), it is prone to a loose assembly of the nut 60 with the fixing base 23.

According to some embodiments of the present disclosure, 4mm≤D1-D2≤6mm.

Optionally, D1-D2 can be 4mm, 4.25mm, 4.5mm, 4.75mm, 5mm, 5.25mm, 5.5mm, 5.75mm, or 6mm.

Compared to 2mm ≤ D1-D2 ≤ 8mm, when 4mm ≤ D1-D2 ≤ 6mm, it is not only convenient for the assembly of the nut 60 with the fixing base 23 but also reduces the probability of the nut 60 loosening after assembly with the fixing base 23.

Referring to FIG. 14, according to some embodiments of the present disclosure, one of the two through-holes 421 is an elongate hole extending along the first direction X.

An elongate hole is a hole formed by extending a circular hole along the first direction X. When the busbar component 40 is assembled with the output pole 24, due to the providing of the elongate hole, even if there are machining errors, it is possible to adjust the position of the fastener 50 within the elongate hole so as to allow the fastener 50 to be inserted into the corresponding second connecting hole 232 and threadedly connected to the corresponding nut 60.

In the above solution, the providing of the elongate hole facilitates absorbing machining errors so as to ensure a precise assembly of the busbar component 40 with the output poles 24 of the two battery modules 20.

According to some embodiments of the present disclosure, both two through-holes 421 can be elongate holes extending along the first direction X.

According to some embodiments of the present disclosure, the present disclosure further provides an electrical device, wherein the electrical device includes the battery 100 provided by any of the embodiments as described above. The battery 100 is configured to supply electric energy to the electrical device.

The electrical device can be any of the above-mentioned devices or systems that apply the battery 100.

According to some embodiments of the present disclosure, referring to FIGS. 3 to 17, the present disclosure provides a battery 100, wherein the battery 100 comprises a box 10, a battery module 20, a partition beam 30, a busbar component 40, and a fastener 50.

The box 10 is rectangular, wherein the box 10 includes a first sub-box 11 and a second sub-box 12. The first sub-box 11 includes a bottom wall 111 and side walls 112. The side walls 112 surround the bottom wall 111, with the thickness direction of the bottom wall 111 perpendicular to the first direction X. The second sub-box 12 is arranged on one side of the side walls 112 away from the bottom wall 111. The first sub-box 11 and the second sub-box 12 are interlocked to form a containment space. The battery module 20 and the partition beam 30 are both provided in the containment space.

The partition beam 30 is provided on the bottom wall 111, wherein the partition beam 30 extends along the third direction. The two ends of the partition beam 30 are respectively connected to the side walls 112. The partition beam 30 includes a top surface 31 away from the bottom wall 111, and the partition beam 30 is provided with a third groove 32 that is recessed from the top surface 31 towards the bottom wall 111. The battery modules 20 are provided on both sides of the partition beam 30 along the first direction X.

The battery module 20 includes a battery cell group, an end plate 22, a fixing base 23, and an output pole 24. The battery cell group comprises multiple battery cells 21 arranged in a stack along a first direction X, and the end plate 22 is arranged on one side of the battery cell group along the first direction X. The end plate 22 comprises a first surface 224 away from the battery cell group. The fixing base 23 is connected to the end plate 22 and protrudes from the first surface 224. The output pole 24 is configured to output electrical energy from the battery cell group.

The battery cell 21 comprises a casing 211 and an electrode terminal 212. The casing 211 is provided with a first wall 2111 facing the end plate 22 and a second wall 2112 away from the end plate 22. The first wall 2111 and the second wall 2112 are oppositely arranged along the first direction X. The electrode terminal 212 is mounted on the first wall 2111 and the electrode terminal 212 is provided with a first side surface 2121. The plane where the first side surface 2121 is located is perpendicular to the first wall 2111. The first region at an edge of the second wall 2112 is recessed to form a second groove 2113, wherein the second groove 2113 is configured to accommodate the electrode terminal 212 of the battery cell 21 adjacent to the second wall 2112.

The end plate 22 comprises an end plate body 221 and an extending portion 222. The extending portion 222 extends from one end of the end plate body 221 along a third direction, and the thickness of the extending portion 222 is less than the thickness of the end plate body 221 so that a first groove 223 is formed on one side of the end plate 22, away from the first surface 224. The first groove 223 extends along the second direction.

The fixing base 23 is provided at an end of the first groove 223 away from the bottom wall 111 along the second direction, and the second direction is parallel to the thickness direction of the bottom wall 111. A portion of the fixing base 23 is provided in the third groove 32, and the fixing base 23 is in contact with the groove bottom surface 32a of the third groove 32.

The output pole 24 comprises a first segment 241, a second segment 242, and a third segment 243. The second segment 242 connects the first segment 241 and the third segment 243. The first segment 241 extends from one end of the width direction of the second segment 242, and the third segment 243 extends from one end of the length direction of the second segment 242. The first segment 241 is perpendicular to the second segment 242, and the third segment 243 is perpendicular to the second segment 242. The width direction of the second segment 242 is parallel to the third direction, and the length direction of the second segment 242, the second direction, and the bottom wall 111 are mutually parallel. The first segment 241 is connected to the first side surface 2121 of the electrode terminal 212 of the battery cell 21 closest to the end plate 22 in the battery cell group. The third segment 243 is provided with the first connecting hole 2431.

The nut 60 is fixed on the third segment 243 of the output pole 24. The threaded hole of the nut 60 is provided in correspondence with the first connecting hole 2431. The fixing base 23 is provided with a second connecting hole 232, and at least a portion of the nut 60 is positioned within the second connecting hole 232, and in a clearance fit with the second connecting hole 232.

The busbar component 40 includes a bent portion and two connecting portions 42, and the bent portion is connected to the two connecting portions 42. Each connection portion 42 is provided with a through-hole 421, and two through-holes 421 are respectively arranged to correspond to the first connecting holes 2431 of the two output poles 24 of the two battery modules 20 on both sides of the partition beam 30.

The fastener 50 is provided in two, and each fastener 50 is provided in correspondence with a through-hole 421. The fastener 50 is inserted into the through hole 421 and the first connecting hole 2431, and is threadedly connected to the nut 60, thereby fixing the busbar component 40 to the corresponding output pole 24.

According to the embodiment of the battery 100 in the present disclosure, the fixing base 23 is arranged on the end plate 22 and protrudes from the first surface 224 of the end plate 22 away from the battery cell group. The fixing base 23 is arranged within the third groove 32 of the partition beam 30 and the fixing base 23 is assembled with the partition beam 30 so as to allow for a thinner thickness of the end plate 22 and reduce the spatial occupancy of the end plate 22 in the first direction X. Consequently, it increases the spatial utilization within the box 10, making the higher energy density of the battery 100.

While preferred embodiments have been described and illustrated in the present disclosure, it is possible to make various improvements and replace components with equivalents within the scope of the present disclosure. In particular, as long as there are no structural conflicts, the various technical features mentioned in each embodiment can be combined in any way. The present disclosure is not limited to the specific embodiments disclosed herein but includes all technical solutions falling within the scope of the claims.

## Claims

1. A battery module, comprising:
a battery cell group, wherein the battery cell group comprises multiple battery cells arranged in a stack along a first direction;
an end plate, arranged on one side of the battery cell group along the first direction, wherein the end plate comprises a first surface away from the battery cell group;
a fixing base, connected to the end plate and protruding from the first surface; and
an output pole, wherein one end of the output pole is electrically connected to the battery cell group, and the other end of the output pole is fixed to the fixing base.

2. The battery module according to claim 1, wherein the fixing base and the end plate are integrally molded.

3. The battery module according to claim 1 or 2, wherein each of the battery cells comprises a casing and an electrode terminal; the casing is provided with a first wall facing the end plate, and the electrode terminal is arranged on the first wall; the electrode terminal is provided with a first side surface, and a plane in which the first side surface is located intersects the first wall; and the output pole is connected to a first side surface of an electrode terminal of one of the battery cells closest to the end plate in the battery cell group.

4. The battery module according to claim 3, wherein the output pole comprises a first segment, a second segment, and a third segment; the first segment is connected to the first side surface of the electrode terminal of the one battery cell closest to the end plate in the battery cell group; the third segment is fixed to the fixing base; and the second segment connects the first segment and the third segment.

5. The battery module according to claim 4, wherein the first segment extends from one end of the second segment in a width direction; the third segment extends from one end of the second segment in a length direction; and the width direction of the second segment and the length direction of the second segment intersect the first direction two by two.

6. The battery module according to claim 5, wherein the first segment is perpendicular to the second segment, and/or the third segment is perpendicular to the second segment.

7. The battery module according to any one of claims 4 to 6, wherein a first groove is provided on a side of the end plate facing the battery cell group, and at least a portion of the second segment is arranged within the first groove.

8. The battery module according to claim 7, wherein the second segment is parallel to a groove bottom surface of the first groove.

9. The battery module according to claim 7, wherein along the first direction, a first gap is arranged between the second segment and a groove bottom surface of the first groove.

10. The battery module according to claim 9, wherein a size of the first gap is C, satisfying 1mm ≤ C ≤ 5mm.

11. The battery module according to claim 10, wherein 2.5mm ≤ C ≤ 3.5mm.

12. The battery module according to any one of claims 7 to 11, wherein the first groove extends along a second direction; the fixing base is provided at one end of the first groove along the second direction; and the second direction intersects the first direction.

13. The battery module according to claim 12, wherein the end plate comprises an end plate body and an extending portion; the extending portion extends from one end of the end plate body along a third direction and a thickness of the extending portion is less than a thickness of the end plate body so that the first groove is formed on one side of the end plate, away from the first surface; the fixing base is arranged at one end of the extending portion along the second direction; and the third direction, the second direction, and the first direction intersect with each other two by two.

14. The battery module according to claim 13, wherein along the second direction, one end of the fixing base is arranged on a portion of the end plate body that extends beyond the extending portion.

15. The battery module according to claim 13 or 14, wherein a side of the extending portion away from the battery cell group is coplanar with a side of the end plate body away from the battery cell group.

16. The battery module according to any one of claims 3 to 15, wherein the casing is further provided with a second wall arranged oppositely to the first wall; and a first region at an edge of the second wall is recessed to form a second groove, wherein the second groove is configured to accommodate an electrode terminal of a battery cell adjacent to the second wall.

17. The battery module according to any one of claims 3 to 16, wherein the casing is provided with the first wall and a second wall arranged oppositely to each other along the first direction; a third wall and a fourth wall arranged oppositely to each other along the second direction; and a fifth wall and a sixth wall arranged oppositely to each other along the third direction, wherein an area of the third wall and an area of the fourth wall are both smaller than an area of the first wall; the area of the third wall and the area of the fourth wall are both smaller than an area of the second wall; an area of the fifth wall and an area of the sixth wall are both smaller than the area of the first wall; and the area of the fifth wall and the area of the sixth wall are both smaller than the area of the second wall; and the first direction, the second direction, and the third direction intersect with each other two by two.

18. A battery, comprising a box and the battery module according to any one of claims 1 to 17, wherein the battery module is arranged inside the box.

19. The battery according to claim 18, wherein the battery further comprises a partition beam; the partition beam is arranged inside the box; along the first direction, the end plate is located between the battery cell group and the partition beam; and the fixing base is arranged on the partition beam.

20. The battery according to claim 19, wherein the box comprises a bottom wall and side walls; the side walls surround the bottom wall, and the partition beam is arranged on the bottom wall; the partition beam extends along the third direction; and the third direction, a thickness direction of the bottom wall, and the first direction intersect with each other two by two.

21. The battery according to claim 20, wherein the partition beam comprises a top surface away from the bottom wall; the partition beam is provided with a third groove that is recessed from the top surface towards the bottom wall; and at least a portion of the fixing base is provided in the third groove.

22. The battery according to claim 21, wherein the fixing base does not protrude from the top surface.

23. The battery according to claim 21 or 22, wherein the fixing base is in contact with a groove bottom surface of the third groove.

24. The battery according to any one of claims 19 to 23, wherein the partition beam is provided with battery modules on both sides along the first direction; and the battery further comprises a busbar component, wherein the busbar component is connected to output poles of two battery modules located on both sides of the partition beam.

25. The battery according to claim 24, wherein fixing bases of the two battery modules are arranged along the first direction.

26. The battery according to claim 24 or 25, wherein an avoidance portion is provided on a side where fixing bases of the two battery modules are close to each other, and the avoidance portion is configured to avoid the busbar component.

27. The battery according to claim 25 or 26, wherein along the first direction, a second gap is provided between the fixing bases of the two battery modules.

28. The battery according to any one of claims 24 to 27, wherein the busbar component comprises a bent portion and two connecting portions, the two connecting portions are respectively connected to the output poles of the two battery modules, and the bent portion is connected to the two connecting portions.

29. The battery according to any one of claims 24 to 28, wherein each of the output poles comprises a first connecting hole, and the busbar component comprises two through-holes; the two through-holes are respectively arranged to correspond to first connecting holes of the two output poles of the two battery modules on both sides of the partition beam; and the battery further comprises a fastener, wherein the busbar component and the output poles of corresponding battery modules are connected by the fastener inserted into the through-holes and the first connecting holes.

30. The battery according to claim 29, wherein the battery further comprises a nut; the nut is fixed on a side of the output pole facing the fixing base; a threaded hole of the nut is provided in correspondence with the first connecting hole; the fixing base is provided with a second connecting hole, and at least a portion of the nut is positioned within the second connecting hole, and in a clearance fit with the second connecting hole; and the fastener is inserted into the through-holes and the first connecting hole and is threadedly connected with the nut.

31. The battery according to claim 30, wherein a diameter of the second connecting hole is D1, and an outer diameter of the nut is D2, satisfying 2mm ≤ D1-D2 ≤ 8mm.

32. The battery according to claim 31, wherein 4mm ≤ D1-D2 ≤ 6mm.

33. The battery according to claim 29, wherein one of the two through-holes is an elongate hole extending along the first direction.

34. An electrical device, comprising the battery according to any one of claims 18 to 33.
